# EUROPÄISCHE PATENTSCHRIFT

(11) **EP 0 425 922 B1**
(45) Veröffentlichungstag und Bekanntmachung des Hinweises auf die Patenterteilung: **21.06.1995**
(21) Anmeldenummer: 90120061.8
(22) Anmeldetag: 19.10.1990
(51) Int. Cl.: C01B 7/07

(54) **Verfahren zur Reinigung und Aufkonzentrierung von verdünnter verunreinigter Salzsäure**
Process for the purification and concentration of diluted impure hydrochloric acid
Procédé de purification et de concentration d'acide chlorhydrique dilué impure

(30) Priorität: 28.10.1989 DE 3936074
(43) Veröffentlichungstag der Anmeldung: 08.05.1991
(73) Patentinhaber: Noell-KRC Umwelttechnik GmbH, 97064 Würzburg (DE)
(72) Erfinder: Kürzinger, Karl, Dr.-Ing., W-8702 Helmstadt (DE); Stephan, Rainer, Dr.-Ing., W-8755 Alzenau (DE)
(74) Vertreter: Werner, Hans-Karsten, Dr.Dipl.-Chem.

(56) Entgegenhaltungen:
- DE-B- 1 203 741
- DE-C- 1 036 825
- GB-A- 1 379 793
- US-A- 2 343 462
- US-A- 3 446 586
- US-A- 3 779 870
- PATENT ABSTRACTS OF JAPAN Band 9, Nr. 145 (C-287)(1868), 20. Juni 1985; & JP - A - 6027604 (ASAHI GLASS K.K.) 12.02.1985

## Beschreibung

Gegenstand der vorliegenden Erfindung ist ein Verfahren zur Reinigung und Aufkonzentrierung von verdünnter, mit Schwermetallen und HF verunreinigter Salzsäure insbesondere aus der Rauchgaswäsche von Müll- und Sondermüllverbrennungsanlagen.

Nach dem Verwertungsgebot sollen die in Rauchgasen von Müllverbrennungsanlagen enthaltenen Schadstoffe soweit wie technisch möglich in verwertbare Stoffe umgesetzt werden.

Neben SO₂ und NOₓ spielen bei der Reinigung von Rauchgasen auch HCl und HF eine große Rolle, insbesondere dann, wenn die Rauchgase aus einer Müllverbrennungsanlage stammen. Je nach Zusammensetzung des zur Verbrennung gelangten Mülls kann der HCl-Gehalt des Abgases sogar mehr als 10 g/m³ betragen. Solch hohe HCl-Gehalte bedürfen in der Regel einer besonderen Behandlung in Rauchgasreinigungsanlagen. Dies geschieht heutzutage vor allem dadurch, daß der SO₂-Reinigungsstufe eine HCl-Abscheidung vorgeschaltet wird. Die HCl-Abscheidung erfolgt hierbei oft simultan mit einer Quenchung des Rauchgases, wobei meist schon alkalische Chemikalien zugesetzt werden. Weiterhin wird bei dieser Quenchung auch ein großer Teil des im Abgas verbliebenenen Reststaubes abgeschieden.

Die bei diesem Abscheideprozeß gewonnene, meist noch salzsaure Lösung bzw. Suspension, enthält im allgemeinen den größten Teil der im Rauchgas enthaltenen Schwermetalle. Meist wird diese salzsaure Lösung bzw. Suspension einer Abwasserbehandlung zugeführt. Durch Zugabe von Alkali- bzw. Erdalkalicarbonaten oder -hydroxiden erfolgt eine Neutralisation und Ausfällung der Schwermetalle. Nach Filtration der Suspension wird in der Regel das Filtrat einem Vorfluter zugeleitet oder eingedampft und der Rückstand einer Deponie zugeführt. Bei der Einleitung in einen Vorfluter enthält das Abwasser meist noch größere Mengen löslicher Salze sowie gewisse Restgehalte an Schwermetallen.

Sofern man aus diesen Rückständen verwertbare Salze, wie Kochsalz oder Calciumchlorid, gewinnen will, muß im allgemeinen eine aufwendige und effektive Abwasseraufbereitung der Eindampfung vorgeschaltet sein und unter Umständen die während des Eindampfens ausfallende Kristallmasse ein- bis mehrfach umkristallisiert werden, was mit entsprechend hohen apparativen und energetischen Aufwand verbunden ist und trotzdem oft noch nicht die von der Praxis für bestimmte Einsatzgebiete geforderten Reinheitsgrade für die Salze sicherstellt.

Die DE-OS 14 67 030 beschreibt ein Verfahren zur Abtrennung von gasförmiger HF aus gasförmigem trockenen Chlorwasserstoffgas an festem Al₂O₃ oder AlO(OH)-Granulat.

Die DE-OS 22 29 571 beschreibt die Entfernung von Verunreinigungen aus gasförmigem Chlorwasserstoff. Dieses Gasgemisch wird über Calciumchlorid in fester, teilchenförmiger und im wesentlichen wasserfreier Form geleitet. Auf Seite 2, Absatz 2, wird auf eine US-Patentschrift 3,140,916 verwiesen, in der das Einleiten einer gasförmigen Mischung von Chlorwasserstoff und Fluorwasserstoff in eine wäßrige Calciumchloridlösung erwähnt ist. Diese Technik hat jedoch erhebliche Nachteile, da hochkorrosive und abriebwirksame Aufschlämmungen entstehen, die für die beteiligten Apparaturen von hohem Nachteil sind.

Die DE-AS 10 36 825 beschreibt ein Verfahren, bei dem der mit Fluorverbindungen verunreinigten Salzsäure bei der Destillation im Verdampfer Aluminiumchlorid zugesetzt wird, wobei die Temperaturen mindestens 82°C betragen sollen. Die HCl-Konzentration soll dabei bereits 18 bis 33 % betragen. Je höher die HCl-Konzentration ist, desto niedriger ist der Bedarf an Aluminiumchlorid. Es bildet sich ein gemischter Aluminium-chlorid-fluorid-Komplex. Zur Ausbildung eines derartigen Komplexes ist es nötig, Aluminium in größeren Mengen zuzugeben, als es dem Fluorgehalt entspricht.

Die DE-AS 11 25 411 beschreibt ein Verfahren zur Herstellung von wasserfreiem Chlorwasserstoff aus konzentrierter wäßriger Salzsäure, bei dem Borsäureanhydrid oder Metaborsäure zugesetzt wird, um das Wasser zu binden. Die Abtrennung von HF und/oder Schwermetallen wird hierin nicht erwähnt.

Die DE-AS 11 53 728 beschreibt ein Verfahren zur Entfernung von Fluorwasserstoff aus Chlorwasserstoffgas. Die Absorption des Fluorwasserstoffs erfolgt durch Kieselgel bei erhöhtem Druck. Im Stand der Technik wird von in Kieselgel suspendierter Borsäure gesprochen, die das Siliciumtetrafluorid selektiv absorbiert.

Die US-A-2,343,462 beschreibt ein Verfahren zur Entfernung von Fluorwasserstoff und gelösten Fluoriden (zum Beispiel Fluorkieselsäure) aus konzentrierter Salzsäure in Gegenwart von Borsäure. Die bevorzugte HCl-Konzentration soll dabei 21 bis 37 % betragen, wobei die Verunreinigung an HF bzw. gelösten Fluoriden bis zu 10 % (bezogen auf 100 % HCl) betragen kann.

Die DE-AS 15 67 603 beschreibt ein Verfahren zur Entfernung von aliphatischen Fluorkohlenwasserstoff- oder Fluorkohlenwasserstoff-Verunreinigungen aus Chlorwasserstoffgas, bei dem das Gas bei Temperaturen von mindestens 200°C mit einem Fluorierungskatalysator in Berührung gebracht wird. Dieser Katalysator liegt als Festbett vor.

Die DE-AS 12 03 741 beschreibt ein Verfahren zur Aufarbeitung von chlorwasserstoffhaltigen Abgasen, die vor allem Phosgen und weitere Verunreinigungen enthalten. Diese Gase werden mit trockener Aktivkohle gereinigt bei Temperaturen oberhalb des Taupunktes.

Die US-A-3,779,870 beschreibt ein Verfahren zur Rückgewinnung praktisch wasserfreiem Chlorwasserstoffgas aus wäßriger Salzsäure, bei dem trockenes Magnesiumchlorid oder Calcium-, Zink- oder Lithiumchlorid zugesetzt wird, um das Wasser zu binden. Dabei beträgt der Gehalt an zugesetztem Magnesiumchlorid bis zu 10 Gew.-%.

Die DE-AS 14 67 074 beschreibt ein Verfahren zur Reinigung von Chlorwasserstoffgas, welches mit erhöhtem Druck arbeitet und so flüssigen Chlorwasserstoff erzeugt, der durch Destillation von den ebenfalls kondensierten Verunreinigungen abgetrennt wird. Zu diesen Verunreinigungen zählen halogenierte Kohlenwasserstoffe, HF und Fluorchlorkohlenwasserstoffe, nicht jedoch die Verunreinigungen, wie sie im Rauchgas von Müllverbrennungsanlagen anfallen.

In der nicht vorpublizierten deutschen Patentanmeldung P 39 12 563.7 (entsprechend EP-A-393 402) der Anmelderin ist ein Verfahren zur Reinigung von Abgas mit hohem Chloridgehalt vorgeschlagen worden, bei dem in einer Vorstufe die stark sauren Bestandteile des Abgases, wie HCl und HF, mit Wasser ausgewaschen werden, welches bis zu 20 g HCl/l enthält, in späteren Stufen die weniger sauren Bestandteile des Abgases SO₂ und NOₓ entfernt werden, wobei bereits in der Vorstufe eine Aufkonzentration der Salzsäure, je nach HCl-Gehalt im Abgas, auf über 50 g HCl/l, vorzugsweise über 80 g HCl/l erfolgt und die so erhaltene verdünnte Salzsäure durch Rektifikation in konzentrierter Salzsäure und eine Sumpffraktion aufgetrennt wird. Im allgemeinen wird dabei eine Salzsäure erhalten, die ca. 20 %ig ist und bereits für eine Reihe von Anwendungszwecken eingesetzt werden kann. Insbesondere ist deren Gehalt an Schwermetallen sehr stark reduziert.

Dieses Ergebnis war besonders überraschend, da in dem zur Rektifikation kommenden aufkonzentrierten Salzsäuren noch immer größere Mengen an Schwermetallen und anderen wasser- und salzsäurelöslichen Salzen vorhanden sind und diese bei der Rektifikation dennoch ausschließlich in der Sumpffraktion verbleiben. Dies war nicht vorherzusehen, da es bekannt ist, daß in den Gasen von Müllverbrennungsanlagen auch wasserdampfflüchtige Metallchloride vorhanden sind. Weiterhin hat sich überraschenderweise gezeigt, daß die im Rektifikationssumpf sich anreichernden Feststoffe und Salze, wie z.B. Calciumsulfat, zu keinerlei Anbackungen und damit zu keinerlei Betriebsstörungen führen. Bei herkömmlichen Eindampfanlagen für chloridsalzhaltige Abwässer kommt es durch derartige Anbackungen zu häufigen Betriebsstörungen und zu längeren Betriebsunterbrechungen.

Sofern in der Vergangenheit in einer Vorstufe die stark sauren Bestandteile des Abgases, wie HCl und HF, nicht unter Zusatz von alkalischen Reagenzien, sondern nur mit Wasser ausgewaschen wurden, durfte die Konzentration an HCl maximal 20 g HCl/l betragen, da andernfalls zu große HCl-Mengen im Abgas verbleiben. Eine derartig verdünnte Salzsäure konnte aber aus Gründen der Wirtschaftlichkeit keinesfalls zu konzentrierterer Salzsäure verarbeitet werden. Gemäß DE-C-39 12 563 wird daher diese in der eigentlichen Absorptionsstufe anfallende verdünnte Salzsäure, welche bis zu 20 g HCl/l enthält, bereits in der Vorstufe einer Aufkonzentration auf über 50 g HCl/l unterworfen.

Vorzugsweise erfolgt die Aufkonzentration in dem Bereich von 80 bis 130 g HCl/l. Je nach HCl-Gehalt des Abgases sind aber auch noch höhere Aufkonzentrationen möglich. Diese Aufkonzentration in der Vorstufe kann beispielsweise dadurch erfolgen, daß die HCl-Wäsche kontinuierlich im Gegenstrom erfolgt und dabei schon eine konzentriertere Salzsäure anfällt.

Als vorteilhafter hat sich eine Aufkonzentration erwiesen, die diskontinuierlich im Gegenstrom erfolgt. Bei dieser Verfahrensweise wird das zu reinigende Abgas durch mindestens zwei Waschstufen geführt, wobei es zunächst mit Chargen verdünnterer Salzsäure in Kontakt gebracht wird, die dabei aufkonzentriert werden, um dann mit Chargen frischen Wassers gewaschen zu werden, welches sich bis auf 20 g HCl/l anreichern darf. Sobald diese für den zulässigen Rest-HCl-Gehalt des Abgases kritische Grenze erreicht ist, wird die Charge durch Frischwasser ersetzt. Die aufkonzentrierte Salzsäure von mindestens 50 g HCl/l wird entnommen und durch die verdünntere HCl-haltige Waschlösung von maximal 20 g HCl/l ersetzt.

Diese Verfahrensweise ist vor allem apparativ einfacher zu gestalten. Der Chargenwechsel kann in einfacher Weise durch Messung des Chloridgehaltes in den Waschlösungen gesteuert werden. Um das Verfahren flexibel zu gestalten, bietet sich an, für die verschiedenen Fraktionen der Waschlösungen Zwischentanks vorzusehen.

Eine weitere bevorzugte Ausgestaltung des Verfahrens gemäß DE-C-39 12 563 besteht darin, daß die Aufkonzentration in einem Quencher erfolgt, in dem das Abgas auf Kühlgrenztemperatur gekühlt und Reststaub entfernt wird. In dem Sumpf eines derartigen Quenchers steigt der HCl-Gehalt ohne weiteres auf mindestens 50 g HCl/l. Dieser Quenchersumpf kann gegebenenfalls nach Abtrennung von Feststoffen unmittelbar in die Rektifikationsanlage eingegeben werden.

Aus der Rektifikationsanlage wird am Kopf Wasserdampf entnommen, der an beliebiger geeigneter Stelle in die Abgasreinigungsanlage zurückgeführt werden kann. Aus dem Sumpf wird eine nicht verbackende Suspension von Feststoffen und einem dem Rektifikationsdruck entsprechenden Gehalt an HCl entnommen. Weiterhin wird der Rektifikationskolonne das dem Rektifikationsdruck entsprechende azeotrope Gemisch aus HCl und Wasser entnommen. Sofern bei Normaldruck rektifiziert wird, erhält man eine azeotrope Salzsäure von ca. 22 % HCl/l. Wird eine höher konzentrierte Salzsäure gewünscht, muß man den Rektifikationsdruck erniedrigen. Wird bei höheren Drucken gearbeitet, erhält man ein azeotropes Gemisch von HCl und Wasser, das nach der Kondensation weniger als 22 % HCl/l enthält.

Salzsäure wird für viele Anwendungszwecke jedoch in der Qualitätsstufe "chemisch rein, 30 bis 31 %" gefordert und geliefert. Von dieser Qualität wird nicht nur ein sehr niedriger Gehalt an metallischen Verunreinigungen gefordert, sondern meist auch ein Gehalt an HF unter 15 mg/l. Die vorliegende Erfindung hat sich die Aufgabe gestellt, aus verdünnter, mit Schwermetallen und/oder HF verunreinigter Salzsäure, wie sie durch Aufkonzentration und Rektifikation von Salzsäure anfällt, aus den Rauchgasen von Müll- und Sondermüllverbrennungsanlagen eine Salzsäure herzustellen, die einer chemisch reinen Qualität entspricht und eine Konzentration von über 30 Gew.-% aufweist. Vorzugsweise soll dabei der Anteil von HF in verwertbare Substanzen überführt werden, so daß auch dieser Anteil der Rauchgase wiederverwendet werden kann und nicht deponiert werden muß.

Diese Aufgabe kann überraschend einfach und kostengünstig dadurch gelöst werden, daß zunächst in einer Vorstufe die stark sauren Bestandteile wie HCl und HF mit Wasser ausgewaschen werden, welches bis zu 20 g HCl/l enthält, wobei bereits eine Aufkonzentration der Salzsäure über 50 g HCl/l erfolgt und die so erhaltene, verdünnte Salzsäure durch Rektifikation in konzentrierter Salzsäure und eine Sumpffraktion aufgetrennt wird und wobei die Rektifikation in Gegenwart eines gelösten fluoridbindenden Zusatzes erfolgt.

Vorzugsweise werden als fluoridbindende Zusätze solche verwendet, die gleichzeitig wasserbindend sind. Als besonders geeignet erwiesen haben sich Magnesiumchlorid, Calciumchlorid, Aluminiumchlorid, Borsäure oder Gemische derselben. Als besonders geeignet hat sich der Zusatz von Aluminiumchlorid einerseits und einem Alkalichlorid erwiesen, da dabei schwerlösliche Kryolithe, wie Na₃AlF₆ entstehen. Diese Substanzen sind beispielsweise einsetzbar bei der industriellen Erschmelzung von Aluminium und können daher besonders einfach nutzbringend verwertet werden.

Das Aufkonzentrieren einer ca. 20 %igen Salzsäure zu einer über 30 %igen Salzsäure kann wegen des bei Normaldruck destillierenden Azeotrops von etwa 20 % nur dadurch erfolgen, daß entweder in zwei Stufen mit verschiedenem Druckniveau rektifiziert wird, oder aber das zusätzliche Wasser durch Substanzen abgetrennt wird, die in der Lage sind, in einer derartigen Salzsäure Wasser zu binden und dem Gemisch zu entziehen. Zu derartigen Substanzen zählen prinzipiell auch konzentrierte Schwefelsäure und Phosphorsäure, jedoch sind diese nicht in der Lage gleichzeitig HF zu binden.

Sofern man den Aufwand für ein Rektifikationsverfahren in zwei Stufen mit verschiedenem Druckniveau (Zweidruckverfahren) vermeiden will, genügt es in die Destillationskolonne zusätzlich eine stark wasserbindende Substanz, wie Aluminiumchlorid, in die Destillationskolonne einzuleiten und dabei in dem zu destillierenden Gemisch zu lösen. Aus dem Sumpf einer derartigen Destillationskolonne wird ein verdünnteres Aluminiumchlorid abgezogen, aus dem beispielsweise durch Zusatz von Alkalisalzen, Alkalikryolithe ausgefällt werden können. Das überschüssige Wasser in der Aluminiumchloridlösung wird hieraus durch Verdampfen abgetrennt und in den Kreislauf zurückgeführt. Aus dem Kopf einer derartigen Destillationskolonne kann ein hochkonzentriertes HCl-Gas abgezogen werden, welches in einer Vorlage mit Wasser zu einer entsprechend konzentrierten Salzsäure umgesetzt wird.

Zweckmäßigerweise wird die Rektifikation aber so durchgeführt, daß am Kopf der Kolonne schon ein HCl-H₂O-Dampfgemisch der gewünschten HCl-Konzentration erhalten wird. Da Aluminiumchlorid nicht nur wasserbindend sondern auch fluoridbindend ist, wird durch diese Verfahrensmaßnahme auch der Gehalt an HF im Produkt erheblich gesenkt. Das HF wird letztendlich in Form eines verwertbaren Kryoliths gewonnen und abgetrennt.

Anstelle von Aluminiumchlorid kann das Verfahren aber auch mit anderen fluorid- und wasserbindenden Zusätzen, wie Magnesiumchlorid oder Calciumchlorid durchgeführt werden, wobei jedoch die Abtrennung und Wiederverwertung der dabei entstehenden Magnesium- oder Calciumfluoride aufwendiger ist. Zur Fluorbindung und -abtrennung können auch Verbindungen wie z.B. Me₂SiCl₂ eingesetzt werden.

Besonders gute Ergebnisse werden erzielt, wenn die Rektifikation in zwei Stufen mit verschiedenem Druckniveau erfolgt. Hierzu wird die Rohsäure beispielsweise in einem Fallfilmverdampfer vollständig verdampft und das Dampfgemisch in einer Vakuumkolonne auf ca. 23 % aufkonzentriert. In einer zweiten Stufe wird diese Säure unter Druck auf ca. 19 % abgereichert. Die Prozeßführung geschiehr auch hier zweckmäßigerweise in der Art, daß am Kopf ein HCl-H₂O-Dampfgemisch übergeht, daß schon die gewünschte Konzentration von über 30 % aufweist. Da selbst bei hohem apparativem Aufwand eine Trennung von HCl und HF in der Praxis nicht gelingt und somit bei diesem Verfahren HF in das Endprodukt gelangen würde, wird auch hierbei dem zu destillierenden Gemisch mindestens eine lösliche fluoridbindende Verbindung zugesetzt. Der Zusatz kann sowohl im Vorverdampfer, in der Vakuumstufe und/oder in der Druckstufe erfolgen. Bei Zusatz von Borsäure entsteht beispielsweise HBF₄, eine sehr hoch siedende Säure, die keinesfalls mit den HCl-Gasen in das Endprodukt gelangt.

Wählt man als fluoridbindende Substanz eine gleichzeitig auch wasserbindende Substanz aus, so wird das Azeotrop der Salzsäure zu konzentrierteren Verhältnissen verschoben oder ganz aufgehoben und gleichzeitig die Flußsäure aus dem Gemisch abgetrennt. Insbesondere bei Verwendung von Aluminiumchlorid ist diese Bedingung hervorragend erfüllt.

Hierbei kann das zunächst entstehende H₃AlF₆ durch Zusatz von Alkalichloriden in Kryolithe umgesetzt werden, die besonders einfach und sinnvoll verwertet werden können. Bei dieser Ausführungsform der Erfindung wird die Rohsäure beispielsweise in einem Fallfilmverdampfer vollständig verdampft und das Dampfgemisch über einen Aktivkohlefilter, der insbesondere elementare Halogene sowie organische Verbindungen abscheidet, einer Trennkolonne zugeleitet. In dieser Kolonne läuft dem Dampf eine stark hygroskopische, konzentrierte Salzlösung entgegen. Die Konzentration der Salzlösung und damit die Effektivität der wasserentziehenden Wirkung wird bevorzugt so gewählt, daß am Kopf des Apparates ein HCl-H₂O-Dampfgemisch übergeht, welches schon die gewünschte HCl-Konzentration von über 30 Gew.-% aufweist. Durch Kondensation wird dann das verwertbare Endprodukt erhalten, während die salzsaure Salzlösung in verdünnterer Form zusammen mit den Fluoriden im Kolonnensumpf gesammelt wird. Die verdünnte Salzlösung aus dem Sumpf wird in einem weiteren Verdampfer aufkonzentriert, bevor sie erneut der Kolonne zugeleitet wird.

Als weiterer Vorteil hat sich erwiesen, daß durch die erfindungsgemäßen Maßnahmen auch die Verunreinigungen durch Schwermetalle in der über 30 %igen Salzsäure weiter gesenkt werden. Offensichtlich wird dies einerseits durch die abermalige Destillation und andererseits durch die Zusätze gelöster fluoridbindender Reagenzien bewirkt, so daß die in der rohen Salzsäure noch vorhandenen Spuren an Schwermetallen zu guter Letzt in einem schwerlöslichen Sumpf wiedergefunden werden, der leicht abgetrennt, wiederverwertet oder deponiert werden kann. Hierbei handelt es sich um minimale Mengen im Vergleich zu den Mengen, die sich ursprünglich in den zu reinigenden Rauchgasen der Müll- oder Sondermüllverbrennungsanlagen finden. Es ist somit möglich, sowohl HCl als auch HF aus diesen Rauchgasen abzutrennen und sinnvoll wiederzuverwerten.

Obwohl dieses Verfahren zunächst entwickelt wurde, um chemisch reine und über 30 %ige Salzsäure aus den verunreinigten ca. 20 %igen Salzsäuren herzustellen, die gemäß der deutschen Patentanmeldung P 39 12 563.7 gewonnen werden, ist es durchaus möglich und sinnvoll, dieses Verfahren auch für verdünnte mit Schwermetallen und HF verunreinigte Salzsäuren zu verwenden, die an anderen Stellen und bei anderen Verfahren anfallen.

## Patentansprüche

1. Verfahren zur Reinigung und Aufkonzentrierung von verdünnter, mit Schwermetallen und HF verunreinigter Salzsäure aus den Rauchgasen von Müll- und Sondermüllverbrennungsanlagen, dadurch gekennzeichnet, daß zunächst in einer Vorstufe die stark sauren Bestandteile wie HCl und HF mit Wasser ausgewaschen werden, welches bis zu 20 g HCl/l enthält, wobei bereits eine Aufkonzentration der Salzsäure über 50 g HCl/l erfolgt und die so erhaltene, verdünnte Salzsäure durch Rektifikation in konzentrierter Salzsäure und eine Sumpffraktion aufgetrennt wird und wobei die Rektifikation in Gegenwart eines gelösten fluoridbindenden Zusatzes erfolgt.

2. Verfahren gemäß Anspruch 1, dadurch gekennzeichnet, daß der fluoridbindende Zusatz gleichzeitig wasserbindend ist.

3. Verfahren gemäß Anspruch 1 oder 2, dadurch gekennzeichnet, daß als fluoridbindender Zusatz Magnesiumchlorid, Calciumchlorid, Aluminiumchlorid, Borsäure oder Gemische derselben verwendet wird.

4. Verfahren gemäß einem der Ansprüche 1 bis 3, dadurch gekennzeichnet, daß als fluoridbindender Zusatz ein Gemisch aus Aluminiumchlorid und Alkalichlorid verwendet wird.

5. Verfahren gemäß einem der Ansprüche 1 bis 4, dadurch gekennzeichnet, daß die Rektifikation in zwei Stufen mit verschiedenem Druckniveau erfolgt.

6. Verfahren gemäß einem der Ansprüche 1 bis 5, dadurch gekennzeichnet, daß die verunreinigte Salzsäure über ein Aktivkohlefilter geleitet wird.

## Claims

1. A process for the purification and concentration of diluted hydrochlorid acid contaminated with heavy metals and HF from the flue gases of incineration plants for normal or special (e.g. toxic) waste, characterized in that in a preliminary step the strongly acidic contents, such as HCl and HF, are first washed out with water containing up to 20 g of HCl per l, wherein concentration of the hydrochlorid acid at above 50 g of HCl per l already occurs, and the diluted hydrochloric acid thus obtained is separated by rectification into concentrated hydrochloric acid and a bottom fraction, said rectification being performed in the presence of a dissolved fluoride binding additive.

2. The process according to claim 1, characterized in that said fluoride binding additive at the same time is a water binding one.

3. The process according to claim 1 or 2, characterized in that magnesium chloride, calcium chloride, aluminium chloride, boric acid, or mixtures thereof are used as said fluoride binding additive.

4. The process according any of claims 1 to 3, characterized in that a mixture of aluminium chloride and an alkali metal chloride is used as said fluoride binding additive.

5. The process according any of claims 1 to 4, characterized in that said rectification is performed in two steps on different pressure levels.

6. The process according any of claims 1 to 5, characterized in that said contaminated hydrochloric acid is passed through an active charcoal filter.

## Revendications

1. Procédé de purification et de concentration d'acide chlorhydrique dilué, souillé par des métaux lourds et HF, provenant des gaz de fumée d'usines d'incinération d'ordures ménagères et de déchets spéciaux, caractérisé en ce que les constituants très acides, comme Hcl et HF, sont d'abord extraits par lavage avec de l'eau qui contient jusqu'à 20 g de Hcl/l, lors d'une opération préalable grâce à laquelle on obtient déjà une concentration en acide chlorhydrique supérieure à 50 g de Hcl/l, et l'acide chlorhydrique dilué ainsi obtenu est séparé, par rectification, en acide chlorhydrique plus concentré et en une fraction de bas de colonne, la rectification se déroulant en présence d'un additif dissous qui fixe les fluorures.

2. Procédé selon la revendication 1, caractérisé en ce que l'additif fixant les fluorures fixe simultanément l'eau.

3. Procédé selon la revendication 1 ou 2, caractérisé en ce qu'on utilise, comme additif fixant les fluorures, le chlorure de magnésium, le chlorure de calcium, le chlorure d'aluminium, l'acide borique ou des mélanges de ceux-ci.

4. Procédé selon l'une des revendications 1 à 3, caractérisé en ce qu'on utilise un mélange de chlorure d'aluminium et de chlorure alcalin comme additif fixant les fluorures.

5. Procédé selon l'une des revendications 1 à 4, caractérisé en ce que la rectification se déroule en deux opérations avec des niveaux différents de pression.

6. Procédé selon l'une des revendications 1 à 5, caractérisé en ce que l'acide chlorhydrique impur est amené sur un filtre à charbon actif.
